Europäisches Patentamt

European Patent Office

Office européen des brevets

(11) Numéro de publication : **0 053 960**
**B1**

# (12) FASCICULE DE BREVET EUROPÉEN

(45) Date de publication du fascicule du brevet :
24.04.85

(21) Numéro de dépôt : **81401808.1**

(22) Date de dépôt : **18.11.81**

(51) Int. Cl.⁴ : **B 60 S   1/40**

(54) **Dispositif de liaison latérale d'un balai d'essuie glace.**

(30) Priorité : **04.12.80 FR 8025733**

(43) Date de publication de la demande :
**16.06.82 Bulletin 82/24**

(45) Mention de la délivrance du brevet :
**24.04.85 Bulletin 85/17**

(84) Etats contractants désignés :
**DE GB IT**

(56) Documents cités :
**EP-A- 0 012 847**
**CH-A-   609 287**
**CH-A-   611 563**
**FR-A- 2 361 253**
**FR-A- 2 385 564**
**FR-A- 2 409 888**
**FR-A- 2 411 735**
**FR-A- 2 451 297**
**FR-A- 2 475 481**
**GB-A- 2 067 068**

(73) Titulaire : **DUCELLIER & Cie**
**Echat 950**
**F-94024 Créteil Cedex (FR)**

(72) Inventeur : **Neumann, Pierre**
**6 Impasse des Prés**
**F-91150 Morigny Champigny (FR)**

(74) Mandataire : **Habert, Roger**
**DUCELLIER & Cie 2, rue Boule Echat 950**
**F-94024 Creteil Cedex (FR)**

Jouve, 18, rue St-Denis, 75001 Paris, France

## Description

La présente invention concerne un dispositif de liaison latérale d'un balai d'essuie-glace à l'extrémité d'un bras d'entraînement selon le préambule de la revendication.

Il est connu un dispositif de liaison de ce type (FR-A-2 451 297) comportant des moyens de verrouillage coopérant avec la gorge de l'axe d'articulation et constitués par une ouverture en forme de boutonnière dont une extrémité est de dimensions telles à autoriser la pénétration de l'axe d'articulation qui vient en butée contre l'extérieur d'une face du bras d'entraînement, et dont l'autre extrémité comprend un rebord formant un épaulement d'appui pour la gorge dudit axe et dont la partie médiane est de dimensions sensiblement inférieures à la dimension du fond de la gorge dudit axe et se déforme élastiquement sous l'effet dudit fond de la gorge lors du mouvement de translation jusqu'à ce que ladite gorge soit bien positionnée contre l'épaulement d'appui, position à partir de laquelle la partie médiane reprend sa forme initiale de manière à assurer le verrouillage élastique du dispositif de liaison sur l'axe d'articulation préalablement monté à l'extrémité du bras.

Le dispositif de liaison ainsi monté sur le bras est solidarisé au balai d'essuie-glace grâce à une lumière ouverte en forme de crochet venant entourer élastiquement pour le verrouiller, l'axe fixe d'origine du balai.

L'inconvénient majeur de ce dispositif se situe essentiellement au niveau du montage car la lumière en forme de crochet ménagée à l'extrémité de l'organe de liaison et l'ouverture en forme de boutonnière enserrant l'axe d'articulation sont ménagées suivant des plans sensiblement parallèles et par conséquent en tirant sur le bras muni du dispositif de liaison pour verrouiller le balai par l'intermédiaire du crochet on tend à déverrouiller l'axe d'articulation du bras précédemment assemblé sur le dispositif de liaison.

Le but de la présente invention est de remédier à ces inconvénients. Ce but est réalisé avec les caractéristiques caractérisantes de la revendication.

La description qui va suivre en regard des dessins annexés fera mieux comprendre comment l'invention peut être réalisée.

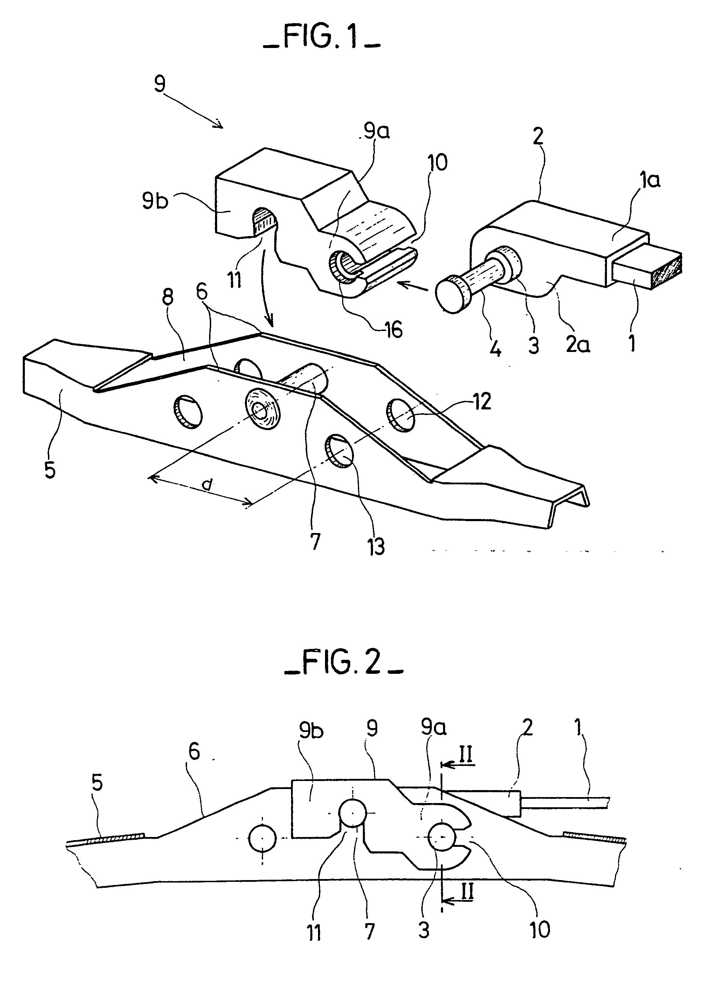

La figure 1 est une vue éclatée d'un essuie-glace muni du dispositif de liaison latérale suivant un mode préférentiel de réalisation de l'invention.

La figure 2 est une vue longitudinale du dispositif suivant la figure 1, en position travail, l'armature portant la lame de balayage étant en coupe.

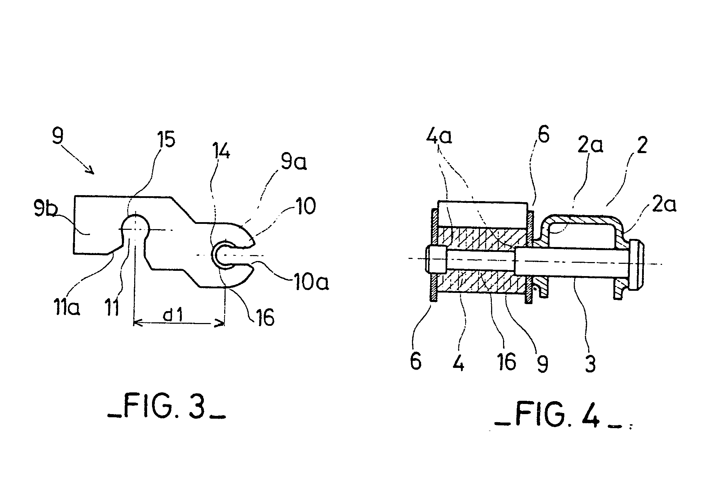

La figure 3 est une vue du dispositif de liaison seul.

La figure 4 est une vue en coupe suivant la ligne II de la figure 2.

Le dispositif de liaison latérale d'un balai d'essuie-glace (non représenté) est disposé de manière connue à l'extrémité 1a d'un bras d'entraînement 1 qui est constituée par une chape 2 en forme de U dont les ailes latérales 2a sont traversées perpendiculairement et librement par un axe cylindrique 3 se prolongeant à l'extérieur par une partie sur laquelle est ménagée une gorge 4 coopérant avec le dispositif de liaison 9 pour constituer un axe d'articulation au balai d'essuie-glace comportant une lame de balayage en caoutchouc (non représentée) reliée par des palonniers à une armature principale 5 dont les parois 6 sont traversées par un axe fixe 7 et dont la partie dorsale 8 est ouverte pour permettre l'introduction du dispositif de liaison 9.

Suivant un mode préféré de réalisation le dispositif de liaison 9, avantageusement réalisé en matière plastique, est constitué par une noix comportant d'une part une ouverture transversale 10 en forme de boutonnière ouverte ménagée à l'une de ses extrémités 9a pour constituer une mâchoire élastique apte à s'engager à la manière d'une fourche dans la gorge 4 de l'axe d'articulation 3 et d'autre part une seconde ouverture 11 en forme de boutonnière ouverte approximativement, perpendiculaire à la première 10 et ménagée à l'autre extrémité 9b de la noix 9 pour constituer une autre mâchoire élastique apte à s'engager, à la manière d'un crochet, par rotation autour de l'axe d'articulation 3. L'axe d'articulation 3 qui est disposé à l'extrémité 1a comme vu précédemment est préalablement engagé dans deux trous 12 et 13 en vis-à-vis, de diamètre correspondant, pratiqués dans les parois 6 de l'armature principale 5 du balai, à une distance d de l'axe fixe 7 égale à l'entre axe d1 des fonds cylindriques 14 et 15 des boutonnières ouvertes 10 et 11.

Afin de faciliter l'engagement des boutonnières ouvertes 10 et 11 sur leur axe respectif 7 et 3 les parois 10a et 11a constituant les mâchoires sont légèrement évasées.

De plus la boutonnière 10 comporte sur son contour intérieur un rebord 16 de dimensions légèrement inférieures à celles de la boutonnière 10 pour former un épaulement sur lequel s'appuient de part et d'autre, les flancs 4a de la gorge 4 afin d'assurer la retenue en translation de l'axe d'articulation 3 sur le balai d'où le bras 1 sur ledit balai par l'intermédiaire de la noix de liaison 9.

La boutonnière 11 peut être inclinée de manière à ce que son axe longitudinal soit situé approximativement sur la tangente du cercle décrit par le rayon de pivotement de la noix 9 de manière à faciliter son ancrage par pivotement.

## Revendication

Dispositif de liaison latérale d'un balai d'essuie-glace à l'extrémité (1a) d'un bras d'entraînement (1) qui est constituée par une chape 2 en forme de U dont les ailes latérales (2a) sont traversées perpendiculairement par un axe cylindrique se prolongeant à l'extérieur par une partie sur laquelle est ménagée une gorge (4) coopérant avec le dispositif de liaison pour constituer un axe d'articulation (3) au balai d'essuie-glace comportant une lame de balayage en caoutchouc reliée par des palonniers à une armature principale (5) dont les parois (6) sont traversées par un axe fixe (7) et dont la partie dorsale (8) est ouverte pour permettre l'introduction du dispositif de liaison, avantageusement réalisé en matière plastique, et constitué par une noix (9), insérée dans la partie dorsale ouverte (8) de l'armature principale (5) et comportant deux logements (10 et 11) dont l'un (11) est traversé par l'axe fixe (7) du balai et l'autre (10) par l'axe d'articulation (3) disposé à l'extrémité (1a) du bras (1) et traversant deux trous (12 et 13) pratiqués en vis-à-vis dans les parois (6) de l'armature principale (5) du balai à une distance de l'axe fixe (7) égale à celle séparant les deux logements (10 et 11) caractérisé en ce que les deux logements (10 et 11) sont constitués par deux boutonnières ouvertes perpendiculaires entre elles et constituant deux mâchoires élastiques aptes à s'engager successivement sur l'axe d'articulation (3), préalablement engagé, à la manière d'une fourche et sur l'axe fixe (7) du balai à la manière d'un crochet par rotation autour de l'axe d'articulation (3).

## Claim

Device for lateral connection of a windscreen wiper blade to the extremity (1a) of a driving arm (1) which is formed by a U-shaped yoke (2) whose side flanges (2a) are traversed perpendicularly by a cylindrical spindle extending to the outside with a part in which is formed a groove (4) cooperating with the connecting device to form a hinge pin (3) for the windscreen wiper blade comprising a rubber wiper blade connected via rocking members to a principal fitting (5) of which the sides (6) are traversed by a fixed spindle (7) and of which the dorsal section (8) is open to allow of the insertion of the connecting device, advantageously produced from plastics material and formed by a body (9) inserted into the open dorsal section (8) of the principal fitting (5) and comprising two recesses (10 and 11) of which the one (11) is traversed by the fixed spindle (7) of the wiper and the other (10) by the hinge pin (3) situated at the extremity (1a) of the arm (1) and traversing two holes (12 and 13) provided opposite each other in the sides (6) of the principal fitting (5) of the wiper at a distance from the fixed spindle (7) equal to that separating the two recesses (10 and 11), characterised in that the two recesses (10 and 11) are formed by two open slots at right angles to each other and forming two elastic jaws able to engage successively over the previously engaged hinge pin (3) in the manner of a fork, and over the fixed spindle (7) of the wiper in the manner of a hook by rotation around the hinge pin (3).

## Patentanspruch

Verbindungsvorrichtung zur seitlichen Verbindung eines Scheibenwischerblattes mit dem Ende (1A) eines Scheibenwischerantriebsarms (1), das von einem U-förmigen Bügel gebildet ist, dessen Seitenflügel (2A) senkrecht von einer zylindrischen Achse durchdrungen sind, die sich nach aussen in einem Abschnitt fortsetzt, an welchem eine Kehle (4) angebracht ist, die im zusammenwirken mit der Verbindungsvorrichtung eine Schwenkachse (3) für das Scheibenwischerblatt darstellt, das ein aus Gummi bestehendes Wischblatt besitzt, welches über Gestände mit einem Hauptankerteil (5) verbunden ist, dessen Wandungen (6) von einer festen Achse (7) durchdrungen sind und dessen Rücken (8) offen ist und dadurch das Einsetzen der vorzugsweise aus Kunststoff hergestellten Verbindungsvorrichtung ermöglicht, die aus einem in den offenen Rücken (8) des Hauptankerteils (5) eingesetzten Kern (9) besteht, in dem zwei Aufnahmen (10 und 11) gebildet sind, von denen die eine (11) von der festen Achse (7) des Scheibenwischerblatts und die andere von der am Ende des Scheibenwischerantriebsarms (1) angebrachten Schwenkachse (3) durchdrungen ist, wobei letztere (3) durch Löcher (12 und 13) verläuft, die einander gegenüberliegend in den Wandungen (6) des Hauptankerteils (5) des Scheibenwischerblatts in einem Abstand von der festen Achse (7) angebracht sind, der dem Abstand zwischen den beiden Aufnahmen (10 und 11) entspricht, dadurch gekennzeichnet, dass die beiden Aufnahmen (10 und 11) aus zwei offenen Ausnehmungen mit zueinander senkrechten Zugangsöffnungen bestehen, die zwei elastische Klemmzangen bilden, welche gabelartig mit der zuvor in die beiden Löcher (12 und 13) der Wandungen des Hauptankerteils eingesetzten Schwenkachse (3) bzw., durch Drehen um diese Schwenkachse hakenartig mit der festen Achse (7) des Scheibenwischerblatts nacheinander in Eingriff bringbar sind.

## _FIG.1_

## _FIG.2_

_FIG. 3_

_FIG. 4 _